# EUROPÄISCHE PATENTSCHRIFT

(11) **EP 3 133 769 B1**
(45) Veröffentlichungstag und Bekanntmachung des Hinweises auf die Patenterteilung: **26.12.2018**
(21) Anmeldenummer: 15181423.3
(22) Anmeldetag: 18.08.2015
(51) Int. Cl.: H04L 9/32

(54) **ABSICHERUNG VON DATENAUSTAUSCH**
SAFEGUARDING OF DATA EXCHANGE
PROTECTION D'ECHANGE DE DONNEES

(43) Veröffentlichungstag der Anmeldung: 22.02.2017
(73) Patentinhaber: Fraunhofer-Gesellschaft zur Förderung der angewandten Forschung e.V., 80686 München (DE)
(72) Erfinder: Bittl, Sebastian, 80997 München (DE)
(74) Vertreter: Schenk, Markus

(56) Entgegenhaltungen:
- MOROGAN M C ET AL: "Certificate management in ad hoc networks", APPLICATIONS AND THE INTERNET WORKSHOPS, 2003. PROCEEDINGS. 2003 SYMPO SIUM ON JAN. 27-31, 2003, PISCATAWAY, NJ, USA,IEEE, 27. Januar 2003 (2003-01-27), Seiten 337-341, XP010644210, ISBN: 978-0-7695-1873-2
- Sebastian Bittl ET AL: "Effective Certificate Distribution in ETSI ITS VANETs Using Implicit and Explicit Requests" In: "Correct System Design", 8. Mai 2015 (2015-05-08), Springer International Publishing 032548, XP55245458, ISSN: 0302-9743 ISBN: 978-3-319-23505-9 Bd. 9066, Seiten 72-83, DOI: 10.1007/978-3-319-17765-6_7, * das ganze Dokument *

## Beschreibung

Ausführungsbeispiele der vorliegenden Erfindung beziehen sich auf ein Verfahren zur Absicherung eines Datenaustausches zwischen einem ersten und einem zweiten Teilnehmer, im Empfangsfall, im Sendefall bzw. im Austauschfall. Weitere Ausführungsbeispiele beziehen sich auf einen Sender mit Absicherungsfunktionalität, einen entsprechenden Empfänger sowie ein System bestehend aus dem Sender und dem Empfänger. Zusätzliche Ausführungsbeispiele beziehen sich auf ein Computerprogramm zur Ausführung eines der Verfahren zur Absicherung des Datenaustausches. Der Erfindungskontext liegt in dem Bereich der Verteilung von multihierarchischen Absicherungsparametern in drahtlosen Netzwerken mit stark dynamischer Teilnehmerzusammensetzung.

Zur Absicherung des Datenaustausches in drahtlosen Netzwerken werden versandte Pakete typischerweise mit digitalen Signaturen versehen. Ein Grundproblem besteht hierbei im notwendigen Austausch von kryptographischen Parametern zwischen Sender und Empfänger(n). Dieses Problem besteht insbesondere in dezentralisierten Netzwerken mit einer hohen Anzahl an (potentiellen) Teilnehmern, wovon zu einem bestimmten Zeitpunkt nur immer Teilmengen direkt miteinander kommunizieren können. Ein Bespiel hierfür sind Fahrzeugnetzwerke, welche über die sog. ITS-G5 Technologie und ETSI ITS Standards miteinander vernetzt sind und dabei ein sog. Vehicular ad-hoc Network (VANET) bilden. Der Großteil der Kommunikation in diesen Netzwerken hat Broadcast-Charakter, d.h. ein Sender viele Empfänger. Auf Grund der hohen Teilnehmerzahl, der hohen Dynamik des einen Teilnehmer umgebenden Netzwerks und der aus Datenschutzgründen notwendigen häufigen Änderung der von einem Nutzer verwendeten Parameter ist eine Vorab-Konfiguration der Teilnehmer nicht (mit vertretbarem Aufwand) umsetzbar. Daher werden die notwendigen Parameter bei Bedarf zwischen den kommunizierenden Stationen ausgetauscht.

Die in der Literatur beschriebenen Absicherungsverfahren fügen der Kommunikation in diesen Netzwerken einen erheblichen Overhead an Konfigurationsparametern hinzu. Zahlreiche dieser Parameter sind typischerweise in sog. Zertifikaten zusammengefasst. Beispielsweise sind darin die öffentlichen Schlüssel enthalten, welche zur Verifikation der verwendeten digitalen Signaturen eines Senders notwendig sind. Um sicherzustellen, dass ein Sender ein valider Teilnehmer des Netzwerkes ist, stellt ihm eine hierzu berechtigte Instanz, eine sog. Certificate Authority im VANET Bereich auch Authorization Authority, Zertifikate (sog. Pseudonym-Zertifikate oder Authorization Tickets) aus und signiert diese mit Parametern, welche im Zertifikat dieser Instanz, dem sog. Certificate Authority Certificate, enthalten sind. Hierdurch ergibt sich eine multi-hierarchische Zertifikatskette, welche mit einem im Vorhinein verteilten Wurzel-Zertifikat (bzw. Root-Zertifikat) endet, welche keine weiteren Signaturinformationen trägt und welchem die Nutzer vertrauen müssen.

Typischerweise erhalten viele Teilnehmer im Netzwerk ihre individuellen Pseudonym-Zertifikate von der gleichen Authorization Authority. Außerdem ist die Gültigkeit der zugehörigen Certificate Authority Certificates wesentlich länger als diejenige der Pseudonym-Zertifikate, da für sie keine strikte Lebensdauerbegrenzung aus Datenschutzgründen notwendig ist. In ETSI ITS werden aktuell drei Hierarchie-Ebenen eingesetzt [1].

Elemente der Zertifikatskette oberhalb der Pseudonym-Zertifikate werden nur auf explizite Anforderung hin versendet. Dies erfolgt relativ selten im Vergleich zur Verteilung von Pseudonym-Zertifikaten. Trotzdem erhöht die Anforderung, Zertifikatsketten zu versenden, die maximale Länge der durch die Absicherungseinheit erzeugten Datenmenge. Da die anderen Kommunikationsschichten keine Kontrolle über die Länge der durch die Absicherungseinheit erzeugten Daten haben, wird immer die maximal mögliche Länge freigehalten.

Bedingt durch die physikalischen Begrenzungen des drahtlosen Kanals und die notwendige abwechselnde Benutzung des Kanals durch verschiedene Teilnehmer ist die maximale Größe von Datenpaketen in Fahrzeugnetzwerken limitiert. Dies ergibt sich beispielsweise aus einer maximal erlaubten Kanalzugriffszeit eines Senders, etwa 0,6 ms im Fall des Control Channel von ITS-G5 [3]. Hierdurch ergibt sich die Notwendigkeit, beim Systemdesign darauf zu achten, dass die Kombination der maximalen Datenlängen der einzelnen (unabhängigen) Kommunikationsschichten (bzw. Layer) in Summe nicht dazu führen, dass beim Kanalzugriff die maximale Zugriffszeit nicht überschritten wird.

Bisher werden Zertifikatsketten in Fahrzeugnetzwerken verteilt, indem ein Teilnehmer die Kette eines oder mehrerer anderer Teilnehmer explizit anfordert. Anschließend wird die komplette Kette versandt. Dies führt dazu, dass die maximale Größe des Datenvolumens, das die Absicherungseinheit erzeugt u.a. durch die Größe der Datenfelder der Zertifikatskette bestimmt wird. In aktuell eingesetzten Systemen wie ETSI ITS und WAVE nehmen die Zertifikate den größten Teil des durch die Absicherungseinheit erzeugten Datenvolumens ein [1], [5], [17] .

Das Dokument mit dem Titel "Certificate management in ad hoc networks" von M. Morogan und S. Muftic, veröffentlicht in den "Proceedings, 2003 Symposium on Applications and the Internet Workshops", befasst sich mit der Benutzung und dem Management von Zertifikaten in offenen Ad Hoc Netzwerken.
In Kapitel 4 wird auf das Austauschen und Übermitteln von Zertifikaten von einem Zertifikatserver eingegangen. Hierbei liegt der Fokus insbesondere darauf, wie die Offline-Nutzung ermöglicht wird.
Das Dokument "Effictive Certificate Distribution in ETSI ITS VANETs Using Implicit and Explicit Requests" von S. Bittl, B. Aydinli und K Roscher, veröffentlicht in "Correct System Design", Springer International Publishing, 2015, zeigt die Zertifikatverteilung mittels impliziten und expliziten Anfragen.
Hierdurch entsteht das Problem, dass durch das maximale Datenvolumen der Absicherungseinheit das maximale Datenvolumen der anderen Kommunikationsschicht begrenzt wird, da die Datenmenge insgesamt pro Packet begrenzt ist.
Deshalb besteht der Bedarf nach einem verbesserten Ansatz.

Aufgabe der vorliegenden Erfindung ist es, ein Verfahren zu entwickeln, dass die Verteilung von vollständigen Zertifikatsketten vermeidet bzw. allgemein die derzeit vorhandenen Grenzen bei der Absicherung des Datenaustausches überwindet.
Die Aufgabe wird durch die unabhängigen Patentansprüche gelöst.
Ausführungsbeispiele der vorliegenden Erfindung schaffen ein Verfahren zur Absicherung eines Datenaustausches zwischen einem ersten und einem zweiten Teilnehmer über ein dezentralisiertes Netzwerk mit einer Vielzahl von Teilnehmern im Empfangsfall, wobei die Absicherung unter Nutzung von individuellen Zertifikaten niedriger Ebene und Autorisierungs-Zertifikat höher Ebene erfolgt. Das Verfahren umfasst die zwei zentralen Schritte "Erhalten eine Nachricht von dem zweiten Teilnehmer" und "Aussenden einer Nachricht an die Vielzahl von Teilnehmern". Zusammen mit den Nachrichten von dem zweiten Teilnehmer wird ein individuelles Zertifikat des zweiten Teilnehmers erhalten, anhand dessen der zweite Teilnehmer identifizierbar ist und ausgehend von welchem eine Identifikations-Nummer des zweiten Teilnehmers erhalten wird (beispielsweise wird in ETSI ITS und WAVE die Identifikations-Nummer mittels einer sog. Hash-Funktion aus dem Zertifikat abgeleitet). Dieses individuelle Zertifikat wird typischerweise nicht zentral vergeben, so dass hier weitere Absicherungsmaßnahmen notwendig sein könnten. Diese weiteren Absicherungsmaßnahmen können beispielsweise durch ein höherwertiges Zertifikat, wie z.B. ein Autorisierungs-Zertifikat, welches typischerweise von einer zentralen Stelle oder von vorbestimmten Stellen vergeben werden, erfolgen. Um das jeweilige Autorisierungs-Zertifikat zu erhalten, wird dieses von dem zweiten Teilnehmer angefragt. Deshalb wird eben der Schritt "Aussenden der Nachricht" umfassend eine Anfrage des ersten Teilnehmers" bezüglich des Autorisierungs-Zertifikats des zweiten Teilnehmers an die Vielzahl von Teilnehmern ausgesendet. Damit nun nicht alle Teilnehmer, die diese Anfrage erhalten, ihr Autorisierungs-Zertifikat aussenden, ist diese Anfrage mit einem weiteren Inhalt, nämlich der Identifikation-Information des zweiten Teilnehmers versehen, um den zweiten Teilnehmer direkt anzusprechen.

Weitere Ausführungsbeispiele schaffen ein Verfahren, wie diese Absicherung aus Sicht des zweiten Teilnehmers erfolgt. Das Verfahren im sogenannten Sendefall umfasst die Schritte "Senden einer Nachricht umfassend das individuelle Zertifikat des zweiten Teilnehmers an den ersten Teilnehmer", "Empfangen einer Nachricht umfassend die Anfrage des ersten Teilnehmers bezüglich des Autorisierungs-Zertifikats des zweiten Teilnehmers" und "Senden einer Nachricht umfassend das Autorisierungs-Zertifikat des zweiten Teilnehmers". Die Nachricht umfassend die Anfrage des ersten Teilnehmers bezüglich des Autorisierungs-Zertifikats des zweiten Teilnehmers umfasst, wie oben bereits erläutert, die Identifikations-Information des zweiten Teilnehmers. In Abhängigkeit von dieser Identifikations-Information wird das Autorisierungs-Zertifikat des zweiten Teilnehmers an die Vielzahl von Teilnehmern (also in den Raum) ausgesendet, und zwar nur dann, wenn die mit der Anfrage empfangene Identifikations-Information mit der eigenen Identifikations-Information des zweiten Teilnehmers übereinstimmt.

Ein weiteres Verfahren beschäftigt sich mit der Gesamtbetrachtung des Datenaustausches im Netzwerk. Dieses Verfahren umfasst die Schritte der oben erläuterten Verfahren.

Ausführungsbeispielen der Erfindung liegt also die Erkenntnis zugrunde, dass in einem dezentral organisierten Netzwerk der Overhead an Datenaustausch, welcher typischerweise in dem Austausch von Zertifikaten unterschiedlicher Ebene liegt, durch das gezielte Anfordern des Autorisierungs-Zertifikats (synonym für Zertifikat höherer Ebene), welches auch als Zertifikat-Autoritäts-Zertifikat (Certificate Authority Certificate) bezeichnet wird, erheblich reduziert werden kann. Zur gezielten Ansprache des Teilnehmers, von welchem das Zertifikat der höheren Ebene angefordert wird, ist es sinnvoll, dass dem anfordernden Teilnehmer eine Information zur Identifizierung des anderen Teilnehmers vorliegt. Diese Identifikation-Information wird aus einem vorher erhaltenen Zertifikat der niedrigeren Ebene gewonnen. In der Konsequenz macht die vorgeschlagene Verfahren das Versenden von mehr als einem Zertifikat, das heißt von Zertifikatsketten unnötig und reduziert hierdurch die maximale Länge der Absicherungsparameter in jeder Botschaft. Diese eingesparte Datenmenge kann entweder die Kanallast reduzieren oder stellt andere Funktionalitäten zur Verfügung (beispielsweise können andere Kommunikations-Layer mehr Datenmenge pro Packet versenden).

Entsprechend weiteren Ausführungsbeispielen kann als Identifikations-Information entweder das gesamte individuelle Zertifikat des zweiten Teilnehmers wieder zurückübertragen werden, so dass sich dieser angesprochen fühlt, oder eine gekürzte Version (wie z.B. ein Hashwert des individuellen Zertifikats) übertragen werden. Im zweiten Fall wäre es zumindest denkbar, dass sich mehrere Teilnehmer durch die gekürzte Version der Identifikation-Information angesprochen fühlen und infolgedessen dann ihr Autorisierungs-Zertifikat übertragen. Dies ist jedoch in aktuellen VANET Umsetzungen (ETSI ITS und WAVE) sehr unwahrscheinlich, da Teilnehmer die eine solche Gleichheit bzgl. Ihrer eigenen Identifikations-Information bemerken das verwendete Pseudonym-Zertifikat wechseln um hierdurch die Identifikations-Information zu wechseln, wodurch eine Eindeutigkeit der Identifikations-Information mit sehr hoher Wahrscheinlichkeit stets gegeben sein sollte.

Da zahlreiche Teilnehmer das gleiche Authentifizierungs-Zertifikat verwenden, tritt häufig die Situation auf, dass der erste Teilnehmer aus einer Reihe anderer Teilnehmer (sog. Anfrage-Kandidaten), welche das gleiche Authentifizierungs-Zertifikat verwenden, einen auswählen kann von welchem er dieses Authentifizierungs-Zertifikat anfordert. Daher wäre es entsprechend weiteren Ausführungsbeispielen sinnvoll, im Vorfeld abzuschätzen, welcher der Anfrage-Kandidaten besonders geeignet ist das Authentifizierungs-Zertifikat an den ersten Teilnehmer zur Verfügung zu stellen. Hierfür können verschiedene Kriterien einzeln oder in kombinierter Form herangezogen werden. Das Abschätzen kann beispielsweise den Unterschritt des Ermittelns der Reaktionszeit auf die Anfrage basierend auf einer gemessenen oder vorhandenen Information, wie z.B. der aktuellen Senderate, enthalten. Alternativ wäre es auch denkbar, dass das Abschätzen den Unterschritt des Ermitteins einer Wahrscheinlichkeit hinsichtlich einer stabilen Kommunikationsverbindung zwischen dem ersten und dem zweiten Teilnehmer, z.B. ausgehend von einer bekannten Positionsinformation des ersten und/oder des zweiten Teilnehmers oder ausgehend von einer Umfeldinformation aus Sicht des ersten Teilnehmers, umfasst. Ergebnisse einzelner Unterschritte können beispielsweise mittels einer Gewichtungsfunktion zu einer gemeinsamen Metrik zusammengefasst werden, auf deren Grundlage die Auswahl aus der Menge der Anfrage-Kandidaten getroffen wird. Dies wird im Folgenden noch detaillierter erläutert.

Entsprechend weiteren Ausführungsbeispielen, könnte die Wahrscheinlichkeit einer mehrfachen Versendung des Authentifizierungs-Zertifikates weiter minimiert werden. Hierzu wäre es aus Sicht der sich angesprochen fühlenden Teilnehmer (aus der Menge der Anfrage-Kandidaten) optional sinnvoll, den aktuellen Datenverkehr, der wie oben bereits erläutert, eine Art Broadcast-Charakter hat, mitzuhören, wobei sie fortlaufend prüfen ob von anderen Teilnehmern das, vom ersten Teilnehmer angeforderte, Authentifizierungs-Zertifikat bereits gesendet wurde. In diesem Fall kann der dies erkennende Teilnehmer das Versenden des Authentifizierungs-Zertifikates unterlassen, wenn er davon ausgeht, dass der erste Teilnehmer (d.h. der Versender der Anfrage) das Authentifizierungs-Zertifikat auch empfangen hat. Zur optionalen Abschätzung, ob der erste Teilnehmer das von einem dritten Teilnehmer versendete Authentifizierungs-Zertifikat auch empfangen hat, kann beispielsweise von einer bekannten Positionsinformation des ersten und/oder des zweiten Teilnehmers oder einer Umfeldinformation aus Sicht des ersten Teilnehmers ausgegangen werden.

Entsprechend weiteren Ausführungsbeispielen wäre es aus Sicht eines Teilnehmers auch sinnvoll, den aktuellen Datenverkehr, der wie oben bereits erläutert, eine Art Broadcast-Charakter hat, mitzuhören, um die entsprechenden Zertifikate vorliegen zu haben bzw. auch bereits in authentifizierter Form vorliegen zu haben. Deshalb weist das oben beschriebene Verfahren, insbesondere das Verfahren im Empfangsmodus den Schritt des Pufferns eines empfangenen, individuellen Zertifikats niedriger Ebene des zweiten Teilnehmers auf, auch wenn das empfangene, individuelle Zertifikat durch den ersten Teilnehmer nicht authentifiziert werden kann. Die Authentifizierung erfolgt, wie oben bereits erläutert, durch ein höherwertiges Zertifikat, wie z.B. das Authentifizierungs-Zertifikat höherer Ebene. Sobald dieses Authentifizierungs-Zertifikat erhalten bzw. verifiziert ist, kann auch das Zertifikat der niedrigeren Ebene authentifiziert werden. Deshalb wäre es optional möglich, dass im Pufferfall das Verfahren den Schritt des Authentifizierens des empfangenen individuellen Zertifikats niedrigeren Ebene umfasst, sobald der erste Teilnehmer selbst das Authentifizierungs-Zertifikat höherer Ebene des zweiten Teilnehmers authentifiziert nachdem er es vom zweiten Teilnehmer oder einem weiteren Teilnehmer empfangen hat. Somit ist es also nicht mehr notwendig, dass alle Zertifikate aller Ebenen, die erforderlich sind von unten nach oben ausgetauscht werden, wenn bereits ein Zertifikat niedriger Ebene vorliegt, da das Authentifizierungs-Zertifikat der höheren Ebene nur ausgehend von einem vorliegenden individuellen Zertifikat der niedrigeren Ebene angefordert bzw. ausgesendet wird. Dies entlastet den Austausch von Absicherungsparametern weiter. Insofern ist es also vorteilhafterweise möglich, dass die Kombination aus Daten-Pufferung am Empfänger und gezielte Anforderung des Autorisierungs-Zertifikats zu einer erheblichen Reduzierung des Daten-Overheads führt.

Weitere Ausführungsbeispiele beziehen sich auf den Empfänger des ersten Teilnehmers, der sowohl eine Empfangseinheit als auch eine Sendeeinheit umfasst. Die Empfangseinheit ist ausgebildet, eine Nachricht von dem zweiten Teilnehmer zusammen mit dem individuellen Zertifikat des zweiten Teilnehmers zu empfangen, während die Sendeeinheit ausgebildet ist, um eine Nachricht umfassend die Anfrage des ersten Teilnehmers bezüglich des Authentifizierungs-Zertifikats des zweiten Teilnehmers auszusenden. Wie oben bereits erläutert, erfolgt das Aussenden an die Vielzahl der Teilnehmer, während aber nur der zweite Teilnehmer direkt durch die zusammen ausgesendete Identifikation-Information ausgesendet wird.

Weitere Ausführungsbeispiele beziehen sich auf einen Sender des zweiten Teilnehmers, der eine Sendeeinheit und eine Empfangseinheit umfasst. Die Sendeeinheit ist wiederum ausgebildet, um zuerst das individuelle Zertifikat des zweiten Teilnehmers auszusenden und auf eine Anfrage des ersten Teilnehmers hin, welche über die Empfangseinheit empfangen wird, eine Nachricht umfassend das Authentifizierungs-Zertifikat des zweiten Teilnehmers auszusenden. Das Aussenden erfolgt wiederum nur dann, wenn ein gezieltes Ansprechen des zweiten Teilnehmers mittels der eigenen Identifikation-Information erfolgt.

Weitere Ausführungsbeispiele beziehen sich auf ein System umfassend die oben definierten Sender und Empfänger.

Zusätzliche Ausführungsbeispiele beziehen sich auf ein Computerprogramm bzw. ein Protokoll, das zumindest eines oder eine Kombination der oben erläuterten Verfahren durchführt.

Weiterbildungen der Erfindung sind in den Unteransprüchen definiert. Ausführungsbeispiele der Erfindung werden anhand der beiliegenden Figuren erläutert. Es zeigen:
- Fig. 1: eine schematische Darstellung eines sequentiellen Zertifikatsaustausches gemäß dem Stand der Technik zur Erläuterung des herkömmlichen Vorgehens;
- Fig. 2: eine schematische Darstellung eines sequentiellen Zertifikatsaustausches gemäß dem Stand der Technik zur Erläuterung der gemäß dem Stand der Technik entstehenden Probleme;
- Fig. 3: eine schematische Darstellung eines sequentiellen Zertifikatsaustausches entsprechend einem ersten Ausführungsbeispiels; und
- Fig. 4: eine schematische Darstellung eines sequentiellen Zertifikatsaustausches gemäß einem zweiten Ausführungsbeispiel.

Nachfolgend werden Ausführungsbeispiele der vorliegenden Erfindung anhand der Figuren im Detail erläutert, wobei gleiche Bezugszeichen für gleiche Elemente oder Schritte versehen sind, so dass die Beschreibung derer austauschbar ist.

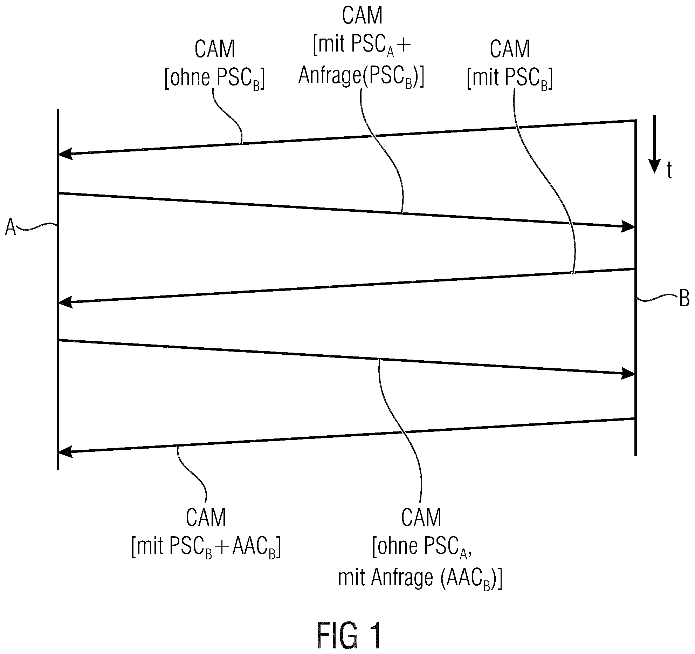

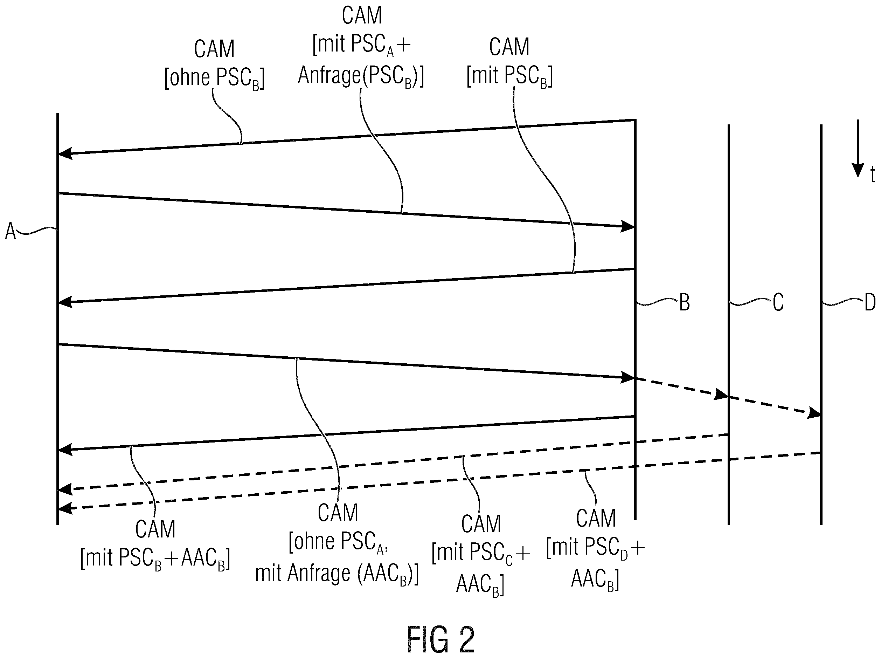

Bevor die eigentlichen Ausführungsbeispiele der Erfindung im Detail erläutert werden, wird anhand von Fig. 1 und Fig. 2 ein typischer Kommunikationsablauf zwischen zwei Teilnehmern A und B (zwei Stationen) erläutert. Bei dem hier dargestellten Szenario handelt es sich um einen standardisierten ETSI ITS-Kommunikationsablauf. Infolgedessen werden auch die Notationen dieses ETSI ITS Standards verwendet. Hierbei steht CAM allgemein für eine Nachricht und bedeutet im Kontext des ETSI ITS Standards "Cooperative Awareness Message", welche in den hier vorliegenden dezentralisiert organisierten Netzwerken das Vorhandensein des jeweiligen Teilnehmers anzeigen. Diese CAM-Nachrichten werden typischerweise mit einer vorgegebenen Frequenz wiederholt ausgesendet und können deswegen auch als sogenannte "Herzschlagnachrichten" bezeichnet werden.

Das Kürzel/Bezugszeichen "PSC" steht für Pseudonym-Zertifikat und stellt die Umsetzung des individuellen Zertifikats entsprechend den ETSI ITS Standards dar. Zusätzlich zu dem Bezugszeichen PSC ist auch immer die Zugehörigkeit zu dem jeweiligen Teilnehmer A oder B als Index vermerkt. Das Bezugszeichen AAC ist die Abkürzung für Certificate Authority Certificate und stellt die Umsetzung des Autorisierungs-Zertifikats im ETSI ITS Standard dar. Die Abkürzung AAC ist ebenfalls mit dem jeweiligen Index des Teilnehmers versehen.

Fig. 1 zeigt den zeitlich ablaufenden sequentiellen Zertifikatsaustausch, also den Austausch von Sicherheitsparametern zwischen A und B. Dieser Zertifikatsaustausch zwischen A und B erfolgt über zwei Hierarchie-Ebenen der Zertifikatskette hinweg.

Ausgangspunkt für die Erläuterung des Schaubilds aus Fig. 1 ist, dass dem Anforderer A bereits das Pseudonym-Zertifikat PSE_{B} der anderen Station B vorliegt. Dieses Vorliegen ist beispielsweise darauf zurückzuführen, dass B eine sogenannte CAM-Nachricht (vgl. Bezugszeichen CAM [ohne PSC_{B}]) ausgesendet hat, woraufhin A eine CAM-Nachricht mit der Anfrage hinsichtlich des PSC_{B} zurückgesendet hat (vgl. Bezugszeichen CAM [mit PSC_{A} + Anfrage (PSC_{B})]). Infolge dieser "CAM [Anfrage (PSC_{B})]" hat nun B eine CAM-Nachricht mit dem jeweiligen PSC_{B} dem A übermittelt. Bei Vorliegen dieses Pseudonym-Zertifikats des zweiten Teilnehmers von B bzw. insbesondere der darin enthaltenen Information kann der erste Teilnehmer A nun feststellen, dass er über das Autorisierungs-Zertifikat AAC_{B} verfügt oder nicht. Um nun im Falle des Nichtverfügens des Zertifikats AAC dieses von B zu erhalten, stellt A eine Anfrage (vgl. CAM [ohne PSC_{A} mit Anfrage (AAC_{B})]). Infolge dieser Anfrage übersendet B dem A oder allgemein allen Teilnehmern das angeforderte Zertifikat AAC_{B} (vgl. CAM [mit PSC_{B} + AAC_{B}]).

Ausgehend von diesem einfachen Ablauf über zwei Hierarchie-Ebenen hinweg wird deutlich, dass die Zertifikatkette, die ausgetauscht werden muss, immer länger wird.

Die Anzahl der Netzwerkteilnehmer, welche sich ein Zertifikat der Hierarchiestute h teilen steigt mit steigenden Werten für h. Dabei ist h = 0 das individuelle Pseudonym-Zertifikat und hₘₐₓ das Root-Zertifikat Daher wird typischerweise nicht nach einer Anforderung für ein Element mit h > 0 sofort die komplette Kette (mit Ausnahme des Root-Zertifikates) versendet. Anstatt dessen wird inkrementell die Länge der versandten Zertifikatskette verlängert. Das WAVE System limitiert nach [17] nicht die Länge der Zertifikatskette.

Bei dem in Fig. 1 dargestellten inkrementellen Vorgehen hat der Anforderer A schon alle Informationen von B der niedrigeren Ebene PSC_{B} empfangen, wenn er die Anfrage hinsichtlich AAC_{B} bezüglich eines Autorisierungs-Zertifikats stellt. Als Reaktion auf die Anfrage sendet B einerseits das Autorisierungs-Zertifikat AAC_{B}, aber auch das individuelle Zertifikat PSC_{B} aus und belastet so den Kanal. Insofern ist es gar nicht mehr notwendig, die niedrigeren Hierarchie-Ebenen als die gerade angeforderte zu empfangen, wenn beispielsweise sichergestellt werden kann, dass nur der Teilnehmer B, dem die Anfrage (AAC_{B}) gestellt wird, antwortet. Dieser Sachverhalt bzw. dieses Missverständnis zwischen den typischerweise im Netzwerk eingeloggten mehreren Teilnehmern, hier zusätzlich C und D zu A und B, ist in Fig. 2 dargestellt.

Fig. 2 zeigt den sequentiellen Zertifikatsaustausch zwischen A und B, wobei jedoch die zusätzlichen Teilnehmer C und D auf die Anfrage "CAM [ohne PSC_{A}, mit Anfrage (AAC_{B})]" antworten, was anhand der gestrichelten Linien CAM [mit PSC_{C} + AAC_{B}] und CAM [mit PSC_{D} + AAC_{B}] dargestellt ist. Wie in [1], [17] offenbart, antworten nach aktuellem Verfahren auf eine derartige Anfrage alle Stationen B, C und D, welche selbst in ihrer Kette das angefügte Zertifikat verwenden. Dabei weiß der Antwortende B nicht, ob er selbst durch vorausgehende Nachrichten die Anfrage ausgelöst hat (vgl. CAM [ohne PSC_{B} bzw. PSC_{C} bzw. PSC_{D}]).

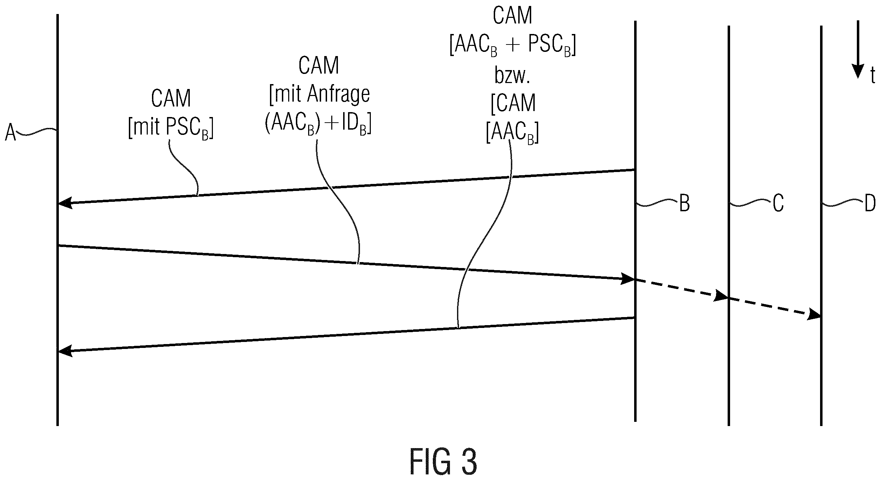

Um diese in Fig. 2 dargestellte Problematik zu vermeiden, wird entsprechend Ausführungsbeispielen der Erfindung das in Fig. 3 gezeigte Verfahren geschaffen. Fig. 3 zeigt einen sequentiellen Zertifikatsaustausch zwischen einem ersten Teilnehmer A und einem zweiten Teilnehmer B, bei dem mit den drei Pfeilen insgesamt fünf Basisschritte dieses Austauschpfeils illustriert sind. Der erste Schritt wird durch den zweiten Teilnehmer B ausgeführt und umfasst das Senden einer Nachricht an den ersten Teilnehmer A (vgl. CAM [mit PSC_{B}]), wobei die Nachricht das individuelle Zertifikat des zweiten Teilnehmers beinhaltet bzw. der Nachricht das individuelle Zertifikat angefügt ist, anhand dessen der zweite Teilnehmer identifizierbar ist. Ausgehend von diesem individuellen Zertifikat kann, wie oben bereits erläutert, eine individuelle Identifikations-Information des zweiten Teilnehmers erhalten werden. In dem zweiten Schritt empfängt der erste Teilnehmer A diese Nachricht CAM [mit PSC_{B}], die er beispielsweise puffert, und ermittelt daraus dann auch die Identifikations-Information des zweiten Teilnehmers. Sollte zwischen dem ersten und dem zweiten Teilnehmer bis dato keine Kommunikation bzw. keine authentifizierte Kommunikation stattgefunden haben, ist es typischerweise notwendig, dass der zweite Teilnehmer B sich gegenüber dem ersten Teilnehmer A authentifiziert. Hierzu fordert der Teilnehmer A in einem dritten Schritt das Authentifizierungs-Zertifikat des zweiten Teilnehmers B an (vgl. Schritt CAM [mit Anfrage (AAC_{B}) + ID_{B}]).

Um die oben erläuterte Problematik, dass die Anfrage hinsichtlich AAC_{B}, welche typischerweise in einem Broadcast-Modus ausgesendet wird, von mehreren Teilnehmern, z.B. C und D, als Anfrage verstanden wird, ist der Nachricht "CAM" die Identifikation-Information ID_{B} beigefügt, um so direkt den zweiten Teilnehmer B anzusprechen. Dieser empfängt dann in einem vierten Schritt die Nachricht "CAM [mit Anfrage (AAC_{B}) + ID_{B}]" und wertet die Nachricht dahin gehend aus, ob die eigene Identifikation-Information ID_{B} enthalten ist. Wenn diese Identifikation-Information durch den zweiten Teilnehmer B in der Nachricht "CAM [mit Anfrage (AAC_{B}) + ID_{B}]" gefunden wird, übersendet dieser sein Authentifizierungs-Zertifikat an A oder an alle, so dass A dieses erhalten kann (vgl. Schritt CAM [AAC_{B}]). Nach dem Erhalten des Authentifizierungs-Zertifikats AAC_{B} des zweiten Teilnehmers B kann der Teilnehmer A den Teilnehmer B als authentifizieren.

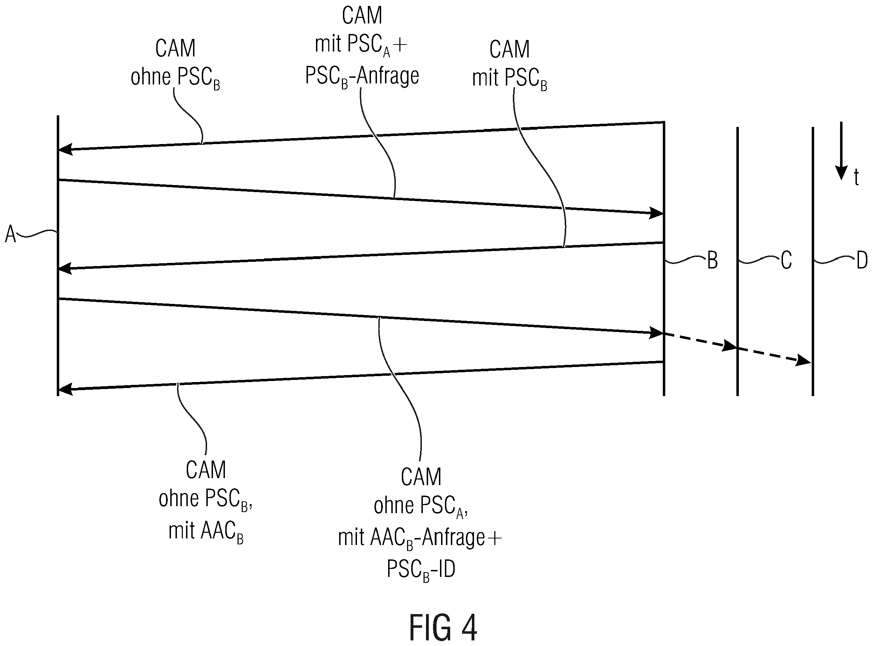

Da nur noch der Teilnehmer B auf die Anfrage "CAM [mit Anfrage (AAC_{B}) + ID_{B}]" reagiert, ist auch nun nicht mehr notwendig, dass zusammen mit dem Zertifikat AAC_{B} das individuelle Zertifikat übermittelt wird. Es sei darauf hingewiesen, dass Teilnehmer A, wenn PSC_{B} bei Teilnehmer A nicht gepuffert ist, nochmal das PSC_{B} von B anfordern könnte, wie bzgl. Fig. 4 erläutert wird. Alternativ zum Puffern von PSC_{B} kann B dieses auch nochmal zusammen mit AAC_{B} an A geschickt werden; in diesem Fall würde dann CAM [mit PSC_{B} + AAC_{B}] versendet. Auch wenn hier noch nicht das Optimum an Reduzierung der Datenlast erreicht wird, stellt dieses Vorgehen bereits eine deutliche Verbesserung gegenüber dem Stande der Technik dar.

Entsprechend Ausführungsbeispielen kann der Empfänger, hier der Teilnehmer A auch die bereits empfangenen Zertifikate, z.B. das Zertifikat PSC_{B} von B zwischenspeichern und bei Erhalten des höherwertigen Zertifikats AAC_{B} dieses mit authentifizieren, da das Zertifikat AAC_{B} nur auf Anfrage hin ausgesendet wird und die Anfrage direkt an B gerichtet ist. Somit ist also sichergestellt, dass auch wenn keine lange Zertifikatskette je Übermittlungsvorgang (vgl. Pfeil) übermittelt wird, dass die Kommunikationskette lückenlos zwischen den zwei Teilnehmern A und B stattfindet, so dass eine Authentifizierung jedes einzelnen Zertifikats nicht mehr notwendig ist, sobald ein höherwertiges Zertifikat authentifiziert wurde.

Diese Kombination von direkter Anfrage eines gewünschten Zertifikats von einem gewünschten Antwortenden mit der Pufferung von Zertifikaten niedriger Ebene wird Bezug nehmend auf Fig. 4 erläutert. Fig. 4 zeigt ein sequentielles Schema zur AAC-Verteilung mit Limitierung der Anzahl der Antwortenden B und nur AAC-Verteilung ohne mehrmalige PSC-Verteilung. Die Kombination bzw. der Zertifikatsaustausch der Zertifikate PSC_{B} und AAC_{B} findet zwischen dem ersten und zweiten Teilnehmer A und B statt, während die Teilnehmer C und D zwar über AAC_{B} verfügen, aber nicht antworten, da, wie anhand der ID_{B} für C und D ersichtlich ist, AAC_{B} nicht von diesen direkt angefragt wird.

Entsprechend Ausführungsbeispielen kann im Falle, dass zwischen dem Versenden zweier Nachrichten durch einen Teilnehmer A dieser von zwei unterschiedlichen anderen Teilnehmern sowohl eine Anfrage nach seinem PSC als auch nach einem höher in der Zertifikatskette gelegenen Zertifikat bekommt, letztes priorisiert werden. Denn ohne dieses kann niemand das PSC authentifizieren und es ist dem Empfänger nicht bekannt, ob der Anfordernde des PSCs das höher in der Zertifikatskette gelegene Zertifikat kennt, das auch angefordert wurde (der Anfordernde des PSCs weiß dies auch nicht, da ohne Kenntnis des PSCs nicht ermittelt werden kann zu welcher Zertifikatskette es gehört).

Durch eine Kombination der ausgeführten Auswahl eines einzelnen Antwortenden B mit einer Pufferung von noch nicht authentifizierten Zertifikaten durch den Anfordernden A bis zur Hierarchieebene h = X ist es nicht mehr notwendig, dass der Antwortende B seine Zertifikatskette versendet. Er kann sich sicher sein, dass der Anfordernde die Elemente der Kette schon bis zur Ebene X kennt, daher versendet der Antwortende B nur noch das Zertifikat der Hierarchieebene X + 1.

Hierdurch entfällt die Notwendigkeit, eine Zertifikatskette zu versenden komplett als Anforderung für das Design eines jeweiligen Netzwerkes, z.B. eines VANETs .

Dadurch ist zur Berechnung der maximalen Datengröße, welche durch die Absicherungseinheit erzeugt wird, nur noch ein einzelnes Zertifikat zu berücksichtigen und nicht mehr eine Vielzahl solcher Datenelemente. Hierdurch sinkt diese maximale Datengröße in allen Fällen, welche eine Zertifikatshierarchie mit mehr als zwei Hierarchieebenen einsetzen (unter der Annahme, dass das Root-Zertifikat nie verteilt wird). Letzteres trifft sowohl auf ETSI ITS als auch auf WAVE zu.

Das Protokoll zur Verteilung von AAC-Zertifikaten könnte alternativ auch vorsehen, dass auf eine AAC Anfrage nur das AAC und nicht die zugehörige Kette versandt wird. Auch hierdurch kann die maximale Länge des Securtiy-Overheads limitiert werden, da nur max. ein Zertifikat in einer Nachricht enthalten ist. Jedoch wird die Kanallast nicht so stark limitiert wie bei oben beschriebenem Verfahren, da potenziell viele Stationen auf die Anfrage antworten. Ein Vorteil der mehrfachen Versendung wäre Redundanz und damit gesteigerte Robustheit gegen Paketverluste. Allerdings steigt in (CSMA-CA basierten) VANETs die Wahrscheinlichkeit von Paketkollisionen typischerweise signifikant mit der Kanallast an.

Daher ist eine Reduzierung der Kanallast ein deutlicher Beitrag zur Verbesserung der Gesamtperformance des VANETs.

Die Bezug nehmend auf Fig. 3 und Fig. 4 erläuterten Vorteile werden alle dadurch ermöglicht, dass der Anfragende A nicht nur die ID des angeforderten Zertifikats (z.B. AAC_{B}), sondern auch die ID des gewünschten Antwortenden B mit versendet. Die IDs können hierbei gegebenenfalls gekürzt werden (wie z.B. von Hashed-ID8 auf Hashed-ID3), wobei dadurch allerdings Kollisionsgefahr der IDs steigt. Dies kann zu unerwünschten Reaktionen eigentlich angeforderter Stationen C und D führen, falls die sich irrtümlich angesprochen fühlen. Um derartige Effekte zu vermeiden, gibt es entsprechend weiteren Ausführungsbeispielen unterschiedliche Herangehensweisen.

Da der Anfordernde A potentiell das gleiche AAC von verschiedenen anderen Stationen B, C, B anfordern kann, trifft er optional eine geeignete Auswahl. Der Anfordernde legt den Angefragten B auf Grundlage folgender Informationen fest:
Erwartete Zeit bis auf die Anfrage reagiert wird, d.h. wann wird der Angefragte das nächste Mal eine Nachricht senden, welche potentiell die Antwort (d.h. das Certificate Authority Certificate) enthalten kann.
1. Die Senderate von Botschaften ist entweder fix (z.B. Basic Safety Messages (BSMs) in WAVE), oder dies kann typischerweise auf Grundlage der in der empfangenen Botschaft enthaltenen Daten geschätzt werden (z.B. aktuelle Senderate in CAMs in ETSI ITS).
2. Wahrscheinlichkeit einer stabilen Kommunikationsverbindung zwischen Anforderndem und Angefragtem, auf Grundlage von einem oder mehreren der folgenden Kriterien:
   a) Position des Antwortenden B, ist typischerweise in der empfangenen Botschaft enthalten (z.B. CAM oder BSM).
   b) Fahrzeug-Umfeldmodell aus einem oder mehreren der folgenden Kriterien
      i) Aktueller Kanalmessung des Anfordernden A (z.B. wie war das SNR als die Botschaft empfangen wurde).
      ii) Einem auf Kartenmaterial basierenden Fahrzeug-Umfeldmodell (z.B. wie in [16] erstellt); die Position der Empfängers als auch des Senders ist typischerweise bekannt.
3. Eine Kombination aus 1. und 2. mittels einer oder mehrerer der folgenden Verfahren:
   a) einer Gewichtungsfunktion, in der die Antwortzeit und die Distanz zum Antwortenden B gewichtet zu einer Gesamtmetrik kombiniert werden, auf deren Grundlage dann der Antwortende B ausgewählt wird.
   b) prädizierter Position des Antwortenden B, auf Grundlage der in der empfangenen Botschaft typischerweise enthaltenen Informationen (Position, Geschwindigkeit und weitere Parameter der Fahrzeugdynamik und Fahrzeugabmessungen) kann die Position eines Antwortenden B zum Zeitpunkt seiner prädizierten Botschaftssendung ermittelt werden. Diese kann alternativ zu der in 2.a. genannten letzten empfangenen Position verwendet werden.
   c) Einschränkung der Kandidatenauswahl an Antwortenden B auf Grundlage von (adaptiven) Schwellwerten. So kann die Hauptauswahl entweder nach 1. oder 2. erfolgen, aber die jeweils andere Metrik mittels eines Sehwellwertes zur Einschränkung der in Betracht gezogenen Antwortkandidaten B, C, D verwendet werden. Die Sehwellwerte können entweder auf Grundlage von Anwendungs-Requirements vorab definiert werden oder adaptiv an die aktuell herrschenden Kommunikationsbedingungen (z.B. aktuelle durchschnittliche Kommunikationsreichweite oder Kanallast) angepasst werden.
      i) Bei höherer Kommunikationsreichweite können weiter entferne Teilnehmer in die Kandidatenauswahl einbezogen werden.
      ii) Bei höherer Kanallast steigt die Wahrscheinlichkeit von Kollisionen auf dem drahtlosen Kanal, daher sind Stationen mit niedrigerer Distanz zur eigenen Station zu bevorzugen.

Durch Kombination aus Vorgehen 1. und 2. (also 3.) kann ein Kompromiss zwischen einer möglichst raschen Antwortzeit und einer möglichst hohen Wahrscheinlichkeit einer erfolgreichen bidirektionalen Kommunikation hergestellt werden. Eine Gewichtungsfunktion in Verbindung mit Schwellwerten (für maximale Antwortzeit, Distanz und weiteren betrachteten Kriterien) bietet sich zur Kombination der beiden Kriterien an. Gewichtungsparameter können simulationsbasiert offline für verschiedene Szenarien ermittelt werden. Auf Grund der eher niedrigen Frequenz an längeren Zertifikats-Austauschverfahren ist eine Adaption im Online-Betrieb wahrscheinlich nicht zielführend.

Auch in obigen Ausführungsbeispielen, welche anhand der sequentiellen Zertifikatsaustauschdiagrammen beschrieben wurden, insbesondere im Kontext von dem jeweiligen Verfahren zum Senden bzw. Empfangen bzw. allgemein zum Zertifikatsaustausch von Zertifikaten liegen, sei darauf hingewiesen, dass weitere Ausführungsbeispiele sich auf die entsprechenden Sender bzw. Empfänger beziehen. Hierbei umfasst jeder Sender bzw. Empfänger sowohl eine Sendeeinheit als auch eine Empfangseinheit, oder ist durch einen sogenannten Transceiver realisiert, um die entsprechenden Nachrichten (vgl. CAM) mit den jeweiligen Anfragen bzw. mit den jeweiligen Zertifikaten zu empfangen und um die entsprechenden Nachrichten (vgl. CAM) mit den Anfragen und den Zertifikaten auszusenden.

Weitere Ausführungsbeispiele beziehen sich auf ein System, in welchem die Teilnehmer, die jeweils den entsprechenden Sender bzw. Empfänger aufweisen, miteinander kommunizieren.

Auch wenn es sich aus obigem Kontext ergibt, sei an dieser Stelle noch einmal klargestellt, dass die Sender bzw. Empfänger beispielsweise in Fahrzeugen oder anderen beweglichen Objekten bzw. allgemeinen Objekten, die dem (Straßen-)Verkehr zuzuordnen sind, vorgesehen sind.

Auch wenn obige Ausführungsbeispiele insbesondere im Rahmen des ETSI ITS Standards unter Einsatz sogenannter ITS-G5 Technologien erläutert wurden, sei darauf hingewiesen, dass obige Ausführungsbeispiele auch auf weitere Kommunikationsstandards, insbesondere für drahtlose Netzwerke übertragbar sind. Bevorzugt sind hierbei drahtlose Netzwerke, die dezentralisiert organisiert sind und eine hohe Dynamik aufweisen.

Allgemein schaffen Ausführungsbeispiele also Verfahren, welche explizit den Antwortenden B einer Authentifizierungs-Zertifikats-Anforderung (AAC-Anforderung) adressiert, indem neben der Authentifizierungs-Zertifikat-ID auch die ID des Antwortenden B bzw. die PSC-ID des Antwortenden B in der Anfrage enthalten ist.

Entsprechend Ausführungsbeispielen schaffen diese Verfahren eine Minimierung der Kanallast und der Worst-Case-Länge des Security-Envelope nach einer Authentifizierungs-Zertifikat-Anfrage (AAC-Anfrage), indem der auf eine Anfrage antwortende Teilnehmer nur das Authentifizierungs-Zertifikat (AAC-Zertifikat) sendet und nicht das individuelle Zertifikat (PSC-Zertifikat).

Durch die Kombination aus diesen zwei, prinzipiell unabhängig einsetzbaren Verfahren (direkte Authentifizierung-Zertifikatsanfrage bei einem bestimmten Teilnehmer und ausschließliche Übermittlung des Authentifizierungs-Zertifikats ohne das individuelle Zertifikat können die Vorteile maximiert werden. Hierbei puffert der Anfragende A das bereits empfangene individuelle Zertifikat (PSC-Zertifikat) des angefragten Teilnehmers und kann dieses nach Empfang des Authentifizierungs-Zertifikats (AAC-Zertifikat) vollständig authentifizieren.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Absicherung eines Datenaustausches zwischen einem ersten (A) und einem zweiten Teilnehmer (B) über ein dezentralisiertes Netzwerk mit einer Vielzahl von Teilnehmern im Empfangsfall, wobei die Absicherung unter Nutzung von individuellen Zertifikaten niedriger Ebene und Autorisierungs-Zertifikaten höherer Ebene (AAC_{B}) erfolgt, mit folgenden Schritten:
Erhalten einer Nachricht (CAM [mit PSC_{B}]) von dem zweiten Teilnehmer (B) zusammen mit dem individuellen Zertifikat (PSC_{B}) des zweiten Teilnehmers (B), anhand dessen der zweite Teilnehmer (B) identifizierbar ist und ausgehend von welchem eine Identifikations-Information (ID_{B}) des zweiten Teilnehmers (B) erhalten wird;
Ermitteln der Identifikations-Information (ID_{B}) des zweiten Teilnehmers (B) ausgehend von der Nachricht (CAM [mit PSC_{B}]); und
Aussenden einer Nachricht (CAM [mit Anfrage (AAC_{B}) + ID_{B}]) umfassend eine Anfrage des ersten Teilnehmers (A) bezüglich des Autorisierungs-Zertifikats des zweiten Teilnehmers (B) an die Vielzahl von Teilnehmern,
wobei zusammen mit der Anfrage die Identifikation-Information des zweiten Teilnehmers (B) ausgesendet wird, um den zweiten Teilnehmer (B) direkt anzusprechen;
**dadurch gekennzeichnet, dass**
das Verfahren ferner den Schritt des Pufferns des empfangenen, individuellen Zertifikats niedriger Ebene des zweiten Teilnehmers (B) umfasst, auch wenn das empfangene, individuelle Zertifikat nicht authentifiziert ist, und
des Authentifizierens des empfangenen, individuellen Zertifikats nach Empfang des Autorisierungs Zertifikats des zweiten Teilnehmers (B) durch den ersten Teilnehmer (A).

2. Verfahren gemäß Anspruch 1, wobei dem Schritt Erhalten der Nachricht (CAM) von dem zweiten Teilnehmer (B) ein Schritt des Aussendens einer unzertifizierten oder mit einem individuellen Zertifikat des ersten Teilnehmers (A) versehenen Nachricht (CAM) umfassend eine Anfrage des ersten Teilnehmers (A) bezüglich des individuellen Zertifikats des zweiten Teilnehmers (B) an die Vielzahl von Teilnehmern vorausgeht.

3. Verfahren gemäß Anspruch 2, wobei dem Schritt des Aussendens der unzertifizierten oder mit dem individuellen Zertifikat des ersten Teilnehmers (A) versehenen Nachricht (CAM) der Schritt des Erhaltens einer unzertifizierten Nachricht (CAM) des zweiten Teilnehmers (B) vorausgeht.

4. Verfahren gemäß einem der vorherigen Ansprüche, wobei die Identifikation-Information des zweiten Teilnehmers (B), welche zusammen mit der Anfrage des ersten Teilnehmers (A) ausgesendet wird, eine gekürzte Version des individuellen Zertifikats des zweiten Teilnehmers (B) oder das individuelle Zertifikat des zweiten Teilnehmers (B) ist.

5. Verfahren gemäß einem der vorherigen Ansprüche, wobei dem Schritt des Aussendens der Nachricht (CAM) umfassend die Anfrage bezüglich des Autorisierungs-Zertifikats des zweiten Teilnehmers (B) ein Schritt des Abschätzens dahin gehend vorausgeht, ob eine Vielzahl der Teilnehmer mit der Anfrage angesprochen werden; und/oder
wobei der Schritt des Abschätzens den Unterschritt der Ermittlung der Reaktionszeit auf die Anfrage basierend auf gemessenen oder vorhandenen Informationen umfasst.

6. Verfahren gemäß Anspruch 5, wobei der Schritt des Abschätzens den Unterschritt des Ermittelns einer Wahrscheinlichkeit hinsichtlich einer stabilen Kommunikationsverbindung zwischen dem ersten (A) und dem zweiten Teilnehmer (B) basierend auf einer vorhandenen Positionsinformation des ersten (A) und/oder zweiten Teilnehmers (B) und/oder basierend auf einer Umfeldinformation aus Sicht des ersten Teilnehmers (A) umfasst.

7. Verfahren gemäß Anspruch 5 oder 6, wobei der Schritt des Abschätzens den Unterschritt des Auswertens des im Kanal ablaufenden Datenaustauschs umfasst, um zu ermitteln, ob ein weiterer Teilnehmer das angefragte Autorisierungs-Zertifikaten höherer Ebene (AAC_{B}) gesendet hat und/oder ob der erste Teilnehmern (A) das Autorisierungs-Zertifikaten höherer Ebene (AAC_{B}) empfangen hat.

8. Verfahren zur Absicherung eines Datenaustausches zwischen einem ersten (A) und einem zweiten Teilnehmer (B) über ein dezentralisiertes Netzwerk mit einer Vielzahl von Teilnehmern im Sendefall, wobei die Absicherung unter Nutzung von individuellen Zertifikaten niedriger Ebene und Autorisierungs-Zertifikaten höherer Ebene erfolgt, mit folgenden Schritten:
Senden einer Nachricht (CAM [mit PSC_{B}]) umfassend das individuelle Zertifikat des zweiten Teilnehmers (B), anhand dessen der zweite Teilnehmer (B) identifizierbar ist und ausgehend von welchem eine Identifikation-Information des zweiten Teilnehmers (B) erhalten wird, an den ersten Teilnehmer (A);
Empfangen einer Nachricht (CAM [mit Anfrage (AAC_{B}) + ID_{B}]) umfassend eine Anfrage des ersten Teilnehmers (A) bezüglich des Autorisierungs-Zertifikats des zweiten Teilnehmers (B) zusammen mit der Identifikation-Information des zweiten Teilnehmers (B); und
Senden einer Nachricht (CAM [AAC_{B}]) umfassend das Autorisierungs-Zertifikat des zweiten Teilnehmers (B) an die Vielzahl von Teilnehmern, wenn die mit der Anfrage empfangene Identifikations-Information mit der eigenen Identifikation-Information des zweiten Teilnehmers (B) übereinstimmt; wobei das Senden der Nachricht (CAM) umfassend das Autorisierungs-Zertifikat ohne individuelles Zertifikat des zweiten Teilnehmers (B) erfolgt, **dadurch gekennzeichnet, dass** das individuelle Zertifikat des zweiten Teilnehmers (B) erst durch das Autorisierungs -Zertifikat des zweiten Teilnehmers (B) authentifizierbar ist.

9. Verfahren gemäß Anspruch 8, wobei Anfragen bezüglich des Autorisierungs-Zertifikats in Vergleich zu individuellen Zertifikaten bevorzugt behandelt werden.

10. Verfahren zur Absicherung eines Datenaustausches zwischen einem ersten (A) und einem zweiten Teilnehmer (B) über ein dezentralisiertes Netzwerk mit einer Vielzahl von Teilnehmern im Austauschfall, wobei die Absicherung unter Nutzung von individuellen Zertifikaten niedriger Ebene und Autorisierungs-Zertifikaten höherer Ebene erfolgt, mit folgenden Schritten:
Senden, durch den zweiten Teilnehmer (B), einer Nachricht (CAM [PSC_{B}]) umfassend das individuelle Zertifikat des zweiten Teilnehmers (B), anhand dessen der zweite Teilnehmer (B) identifizierbar ist und ausgehend von welchem eine individuelle Identifikation-Information des zweiten Teilnehmers (B) erhalten wird, an den ersten Teilnehmer (A);
Erhalten, durch den ersten Teilnehmer (A), der Nachricht (CAM [mit PSC_{B}]) von dem zweiten Teilnehmer (B)zusammen mit dem individuellen Zertifikat des zweiten Teilnehmers (B);
Ermitteln, durch den ersten Teilnehmer (A), der Identifikations-Information (ID_{B}) des zweiten Teilnehmers (B) ausgehend von der Nachricht (CAM [mit PSC_{B}]);
Aussenden, durch den ersten Teilnehmer (A), einer Nachricht (CAM [mit Anfrage (AAC_{B}) + ID_{B}]) umfassend eine Anfrage des ersten Teilnehmers (A) bezüglich des Autorisierungs-Zertifikats des zweiten Teilnehmers (B) an die Vielzahl von Teilnehmern, wobei zusammen mit der Anfrage die Identifikation-Information des zweiten Teilnehmers (B) ausgesendet wird, um den zweiten Teilnehmer (B) direkt anzusprechen;
Empfangen, durch den zweiten Teilnehmer (B), der Nachricht (CAM [mit Anfrage (AAC_{B}) + ID_{B}]) umfassend die Anfrage des ersten Teilnehmers (A) bezüglich des Autorisierungs-Zertifikats des zweiten Teilnehmers (B) zusammen mit der Identifikation-Information des zweiten Teilnehmers (B); und
Senden, durch den zweiten Teilnehmer (B), einer Nachricht (CAM [AAC_{B}]) umfassend das Autorisierungs-Zertifikat des zweiten Teilnehmers (B) an die Vielzahl von Teilnehmern, wenn die mit der Anfrage empfangene Identifikation-Information mit der eigenen Identifikation-Information des zweiten Teilnehmers (B) übereinstimmt, wobei das Senden der Nachricht (CAM) umfassend das Autorisierungs-Zertifikat ohne individuelles Zertifikat des zweiten Teilnehmers (B) erfolgt;
**dadurch gekennzeichnet, dass** das Verfahren ferner den Schritt des
Pufferns eines empfangenen, individuellen Zertifikats niedriger Ebene des zweiten Teilnehmers (B) umfasst, auch wenn das empfangene, individuelle Zertifikat nicht authentifiziert ist, und
des Authentifizierens des empfangenen, individuellen Zertifikats nach Empfang des Autorisierungs ;-Zertifikats des zweiten Teilnehmers (B) durch den ersten Teilnehmer (A), umfasst.

11. Verfahren gemäß Anspruch 10, wobei das Verfahren den Schritt des Authentifizierens des empfangenen, individuellen Zertifikats niedriger Ebene des zweiten Teilnehmers (B) umfasst, sobald der zweiter Teilnehmer (B) und/oder ein weiterer Teilnehmer (C, D) das Authentifizierungs-Zertifikat (AAC_{B}) höherer Ebenen des zweiten Teilnehmers (B) authentifiziert.

12. Verfahren gemäß einem der vorhergehenden Ansprüche, wobei zur Absicherung weiterer Zertifikate in einer Ebene unterhalb der Ebene des individuellen Zertifikats (PSC_{B}, PSC_{A}) und/oder oberhalb der Ebene des Autorisierungs-Zertifikats genutzt werden.

13. Verfahren gemäß einem der vorhergehenden Ansprüche, wobei die individuellen Zertifikate (PSC_{B}, PSC_{A}) niedriger Ebene und/oder die Autorisierungs-Zertifikate höher Ebene Konfigurationsparameter umfassen.

14. Verfahren gemäß einem der vorherigen Ansprüche, wobei die Nachricht (CAM) eine wiederkehrende Bereitschaftsnachricht ist.

15. Verfahren gemäß einem der vorherigen Ansprüche, wobei das dezentralisierte Netzwerk ein Funknetzwerk und/oder ein Ad-hoc-Netzwerk und/oder ein Vehicular-ad-hoc-Netzwerk und/oder ein Car-to-x-Netzwerk ist.

16. Empfänger eines ersten Teilnehmers (A) zur Absicherung eines Datenaustausches zwischen dem ersten Teilnehmer (A) und einem zweiten Teilnehmer (B) über ein dezentralisiertes Netzwerk mit einer Vielzahl von Teilnehmern im Empfangsfall, wobei die Absicherung unter Nutzung von individuellen Zertifikaten (PSC_{B}, PSC_{A}) niedriger Ebene und Autorisierungs-Zertifikaten höherer Ebene erfolgt, mit folgenden Merkmalen:
eine Empfangseinheit ausgebildet zum Erhalten einer Nachricht (CAM) von dem zweiten Teilnehmer (B) zusammen mit dem individuellen Zertifikat (PSC_{B}, PSC_{A}) des zweiten Teilnehmers (B), anhand dessen der zweite Teilnehmer (B) identifizierbar ist und ausgehend von welchem eine Identifikation-Information (ID_{B}) des zweiten Teilnehmers (B) erhalten wird und ausgebildet zum Ermitteln der Identifikations-Information (ID_{B}) des zweiten Teilnehmers (B) ausgehend von der Nachricht (CAM [mit PSC_{B}]); und
Sendeeinheit ausgebildet zum Aussenden einer Nachricht (CAM) umfassend eine Anfrage des ersten Teilnehmers (A) bezüglich des Autorisierungs-Zertifikats des zweiten Teilnehmers (B) an die Vielzahl von Teilnehmern,
wobei zusammen mit der Anfrage die Identifikation-Information (ID_{B}) des zweiten Teilnehmers (B) ausgesendet wird, um den zweiten Teilnehmer (B) direkt anzusprechen;
**dadurch gekennzeichnet, dass** die Empfangseinheit ausgebildet ist, das empfangene, individuelle Zertifikat niedriger Ebene des zweiten Teilnehmers (B) zu puffern, auch wenn das empfangene, individuelle Zertifikat nicht authentifiziert ist, und das empfangene, individuelle Zertifikat nach Empfang des Autorisierungs -Zertifikats des zweiten Teilnehmers (B) zu authentifizieren.

17. Sender eines zweiten Teilnehmers (B) zur Absicherung einer Datenkommunikation zwischen einem ersten Teilnehmer (A) und dem zweiten Teilnehmer (B) über ein dezentralisiertes Netzwerk mit einer Vielzahl von Teilnehmern im Sendefall, wobei die Absicherung unter Nutzung von individuellen Zertifikaten (PSC_{B}, PSC_{A}) niedriger Ebene und Autorisierungs-Zertifikaten höherer Ebene erfolgt, mit folgenden Merkmalen:
Sendeeinheit ausgebildet zum Senden einer Nachricht (CAM) umfassend das individuelle Zertifikat (PSC_{B}, PSC_{A}) des zweiten Teilnehmers (B), anhand dessen der zweite Teilnehmer (B) identifizierbar ist und ausgehend von welchem eine Identifikation-Information (ID_{B}) des zweiten Teilnehmers (B) erhalten wird, an den ersten Teilnehmer (A);
Empfangseinheit ausgebildet zum Empfang einer Nachricht (CAM) umfassend eine Anfrage des zweiten Teilnehmers (B) bezüglich des Autorisierungs-Zertifikats des zweiten Teilnehmers (B) zusammen mit der Identifikation-Information (ID_{B}) des zweiten Teilnehmers (B); und
wobei die Sendeeinheit ferner ausgebildet ist, eine Nachricht (CAM) umfassend das Autorisierungs-Zertifikat des zweiten Teilnehmers (B) an die Vielzahl von Teilnehmern auszusenden, wenn die mit der Anfrage empfangene Identifikation-Information (ID_{B}) des zweiten Teilnehmers (B) mit der eigenen Identifikation-Information (ID_{B}) übereinstimmt, wobei das Senden der Nachricht (CAM) umfassend das Autorisierungs-Zertifikat ohne individuelles Zertifikat des zweiten Teilnehmers (B) erfolgt; **dadurch gekennzeichnet, dass** das individuelle Zertifikat des zweiten Teilnehmers (B) erst durch das Autorisierungs -Zertifikat des zweiten Teilnehmers (B) authentifizierbar ist [HP1].

18. System umfassend einen Sender gemäß Anspruch 16 und einen Empfänger gemäß Anspruch 17.

19. Computerprogramm mit einem Programmcode zur Durchführung eines Verfahrens nach einem der Ansprüche 1 bis 15, wenn das Programm auf einem oder mehreren Computern abläuft.

## Claims

1. Method for securing a data exchange between a first (A) and a second participant (B) via a decentralized network with a multitude of participants in the event of reception, wherein securing is carried out using individual low-level certificates and higher-level authorization certificates (AAC_{B}), comprising:
receiving a message (CAM) [with PSC_{B}] from the second participant (B) together with the individual certificate (PSC_{B}) of the second participant (B), based on which the second participant (B) is identifiable and based on which identification information (ID_{B}) of the second participant (B) is obtained;
determining the identification information (ID_{B}) of the second participant (B) based on the message (CAM) [with PSC_{B}]); and
transmitting to the multitude of participants a message (CAM) [with request (AAC_{B}) + ID_{B}]) including a request of the first participant (A) with respect to the authorization certificate of the second participant (B),
wherein the identification information of the second participant (B) are transmitted together with the request in order to directly address the second participant (B);
**characterized in that** the method further includes the step of buffering the received individual low-level certificate of the second participant (B) even if the received individual certificate is not authenticated, and
authenticating the received individual certificate after reception of the authorization certificate of the second participant (B) by the first participant (A).

2. Method according to claim 1, wherein the step of obtaining the message (CAM) from the second participant (B) is preceded by a step of transmitting to the multitude of participants a message that is uncertified or that is provided with an individual certificate of the first participant (A), including a request of the first participant (A) with respect to the individual certificate of the second participant (B),.

3. Method according to claim 2, wherein the step of transmitting the message (CAM) that is uncertified or that is provided with the individual certificate of the first participant (A) is preceded by the step of obtaining an uncertified message (CAM) of the second participant (B).

4. Method according to any one of the preceding claims, wherein the identification information of the second participant (B) which is transmitted together with the request of the first participant (A) is a shortened version of the individual certificate of the second participant (B) or is the individual certificate of the second participant (B).

5. Method according to any one of the preceding claims, wherein the step of transmitting the message (CAM) including the request with respect to the authorization certificate of the second participant (B) is preceded by a step of estimating if a multitude of the participants is addressed with the request; and/or wherein the step of estimating includes the sub-step of determining the reaction time to the request based on measured or present information.

6. Method according to claim 5, wherein the step of estimating includes the sub-step of determining a probability with regard to a stable communication connection between the first (A) and the second participant (B) based on present position information of the first (A) and/or the second participant (B) and/or based on environment information from the point of view of the first participant (A),

7. Method according to claim 5 or 6, wherein the step of estimating includes the sub-step of evaluating the data exchange occurring in the channel in order to determine if a further participant transmitted the requested higher-level authorization certificate (AAC_{B}) and/or if the first participant (A) received the higher-level authorization certificate (AAC_{B}).

8. Method for securing a data exchange between a first (A) and a second participant (B) via a decentralized network with a multitude of participants in the event of transmission, wherein securing is carried out using individual low-level certificates and higher-level authorization certificates, comprising:
transmitting to the first participant (A) a message (CAM [with PSC_{B}] including the individual certificate of the second participant (B), based on which the second participant (B) is identifiable and based on which identification information of the second participant (B) are obtained;
receiving a message (CAM [with request (AAC_{B}) + ID_{B}]) including a request of the first participant (A) with respect to the authorization certificate of the second participant (B) together with the identification information of the second participant (B); and
transmitting to the multitude of participants a message (CAM [AAC_{B}]) including the authorization certificate of the second participant (B) if the identification information received with the request matches the own identification information of the second participant (B); wherein transmitting the message (CAM) including the authorization certificate takes place without an individual certificate of the second participant (B), **characterized in that** the individual certificate of the second participant (B) may only be authenticated through the authorization certificate of the second participant (B).

9. Method according to claim 8, wherein requests with respect to the authorization certificate are preferably handled compared to individual certificates.

10. Method for securing a data exchange between a first (A) and a second participant (B) via a decentralized network with a multitude of participants in the event of an exchange, wherein securing is carried out using individual low-level certificates and higher-level authorization certificates, comprising:
transmitting, by the second participant (B), to the first participant (A) a message (CAM [PSC_{B}]) including the individual certificate of the second participant (B), based on which the second participant (B) is identifiable and based on which individual identification information of the second participant (B) are obtained;
obtaining, by the first participant (A), the message (CAM [with PSC_{B}]) from the second participant (B) together with the individual certificate of the second participant (B);
determining, by the first participant (A), the identification information (ID_{B}) of the second participant (B) based on the message (CAM [with PSC_{B}]);
transmitting, by the first participant (A), to the multitude of participants a message [with request (AAC_{B}) + ID_{B}]) including a request of the first participant (A) with respect to the authorization certificate of the second participant (B), wherein the identification information of the second participant (B) is transmitted together with the request in order to directly address the second participant (B);
receiving, by the second participant (B), the message (CAM [with request (AAC_{B}) + ID_{B}]) including the request of the first participant (A) with respect to the authorization certificate of the second participant (B) together with the identification information of the second participant (B); and
transmitting, by the second participant (B), to the multitude of participants a message (CAM [AAC_{B}]) including the authorization certificate of the second participant (B) if the identification information received with the request matches the own identification information of the second participant (B), wherein transmitting the message (CAM) including the authorization certificate is carried out without an individual certificate of the second participant (B);
**characterized in that** the method further includes the step of buffering a received individual low-level certificate of the second participant (B) even if the received individual certificate is not authenticated, and
authenticating the received individual certificate after reception of the authorization certificate of the second participant (B) by the first participant (A).

11. Method according to claim 10, wherein the method includes the step of authenticating the received individual low-level certificate of the second participant (B) as soon as the second participant (B) and/or a further participant (C, D) authenticates the higher-level authentication certificate (AAC_{B}) of the second participant (B).

12. Method according to any one of the preceding claims, wherein further certificates on a level below the level of the individual certificate (PSC_{B}, PSC_{A}) and/or above the level of the authorization certificate are used for securing.

13. Method according to any one of the preceding claims, wherein the individual low-level certificate (PSC_{B}, PSC_{A}) and/or the higher-level authorization certificates include configuration parameters.

14. Method according to any one of the preceding claims, wherein the message (CAM) is a returning availability message.

15. Method according to any one of the preceding claims, wherein the decentralized network is a radio network and/or an ad-hoc network and/or a vehicular-ad-hoc network and/or a car-to-x network.

16. Receiver of a first participant (A) for securing a data exchange between the first participant (A) and a second participant (B) via a decentralized network with a multitude of participants in the event of reception, wherein securing is carried out using individual low-level certificates (PSC_{B}, PSC_{A}) and higher-level authorization certificates, comprising:
a reception unit configured for obtaining a message (CAM) from the second participant (B) together with the individual certificate (PSC_{B}, PSC_{A}) of the second participant (B), based on which the second participant (B) is identifiable and based on which identification information (ID_{B}) of the second participant (B) are obtained, and configured for determining the identification information (ID_{B}) of the second participant (B) based on the message (CAM [with PSC_{B}]); and
a transmission unit configured for transmitting to the multitude of participants a message (CAM) including a request of the first participant (A) with respect to the authorization certificate of the second participant (B),
wherein the identification information (ID_{B}) of the second participant (B) are transmitted together with the request in order to directly address the second participant (B);
**characterized in that** the reception unit is configured to buffer the received individual low-level certificate of the second participant (B) even if the received individual certificate is not authenticated, and to authenticate the received individual certificate after receiving the authorization certificate of the second participant (B).

17. Transmitter of a second participant (B) for securing a data communication between a first participant (A) and a second participant (B) via a decentralized network with a multitude of participants in the case of transmission, wherein securing is carried out using individual low-level certificates (PSC_{B}, PSC_{A}) and higher-level authorization certificates, comprising:
a transmission unit configured for transmitting to the first participant (A) a message (CAM) including the individual certificate (PSC_{B}, PSC_{A}) of the second participant (B), based on which the second participant (B) is identifiable and based on which identification information (ID_{B}) of the second participant (B) is obtained;
a reception unit configured for receiving a message (CAM) including a request of the second participant (B) with respect to the authorization certificate of the second participant (B) together with the identification information (ID_{B}) of the second participant (B); and
wherein the transmission unit is further configured to transmit to the multitude of participants a message (CAM) including the authorization certificate of the second participant (B) if the identification information (ID_{B}) of the second participant (B) received with the request matches the own identification information (ID_{B}), wherein transmitting the message (CAM) including the authorization certificate is carried out without an individual certificate of the second participant (B); **characterized in that** the individual certificate of the second participant (B) may only authenticated through the authorization certificate of the second participant (B).

18. System including a transmitter according to claim 16 and a receiver according to claim 17.

19. Computer program having a program code for executing a method according to any one of claims 1 to 15, when the program runs on one or several computers.

## Revendications

1. Procédé de sécurisation d'un échange de données entre un premier (A) et un deuxième abonné (B) via un réseau décentralisé avec une pluralité d'abonnés dans le cas de la réception, dans lequel la sécurisation a lieu à l'aide de certificats individuels de niveau inférieur et de certificats d'autorisation de niveau supérieur (AAC_{B}), aux étapes suivantes consistant à:
obtenir un message (CAM [avec PSC_{B}]) du deuxième abonné (B) ensemble avec le certificat individuel (PSC_{B}) du deuxième abonné (B) à l'aide duquel peut être identifié le deuxième abonné (B) et à partir duquel est obtenue une information d'identification (ID_{B}) du deuxième abonné (B);
déterminer l'information d'identification (ID_{B}) du deuxième abonné (B) à partir du message (CAM [avec PSC_{B}]); et
envoyer à la pluralité d'abonnés un message (CAM [avec requête (AAC_{B}) + ID_{B}]) comportant une requête du premier abonné (A) relative au certificat d'autorisation du deuxième abonné (B),
dans lequel est envoyée, ensemble avec la requête, l'information d'identification du deuxième abonné (B), pour solliciter directement le deuxième abonné (B);
**caractérisé par le fait que**
le procédé comprend par ailleurs l'étape consistant à mettre en mémoire tampon le certificat individuel de niveau inférieur reçu du deuxième abonné (B), même si le certificat individuel reçu n'est pas authentifié, et
authentifier le certificat individuel reçu à la réception du certificat d'autorisation du deuxième abonné (B) par le premier abonné (A).

2. Procédé selon la revendication 1, dans lequel l'étape consistant à recevoir le message (CAM) du deuxième abonné (B) est précédée d'une étape consistant à envoyer à la pluralité d'abonnés un message (CAM) non certifié ou muni d'un certificat individuel du premier abonné (A) comportant une requête du premier abonné (A) relative au certificat individuel du deuxième abonné (B).

3. Procédé selon la revendication 2, dans lequel l'étape consistant à envoyer le message (CAM) non certifié ou muni d'un certificat individuel du premier abonné (A) est précédée de l'étape consistant à obtenir un message non certifié (CAM) du deuxième abonné (B).

4. Procédé selon l'une des revendications précédentes, dans lequel l'information d'identification du deuxième abonné (B) qui est envoyée ensemble avec la requête du premier abonné (A) est une version abrégée du certificat individuel du deuxième abonné (B) ou le certificat individuel du deuxième abonné (B).

5. Procédé selon l'une quelconque des revendications précédentes, dans lequel l'étape consistant à envoyer le message (CAM) comportant la requête relative au certificat d'autorisation du deuxième abonné (B) est précédée d'une étape consistant à estimer si une pluralité d'abonnés sont sollicités par la requête; et/ou
dans lequel l'étape consistant à estimer comporte la sous-étape consistant à déterminer le temps de réponse à la requête sur base des informations mesurées ou existantes.

6. Procédé selon la revendication 5, dans lequel l'étape consistant à estimer comporte la sous-étape consistant à déterminer une probabilité en ce qui concerne une connexion de communication stable entre le premier (A) et le deuxième abonné (B) sur base d'une information de position existante du premier (A) et/ou du deuxième abonné (B) et/ou sur base d'une information d'environnement du point de vue du premier abonné (A).

7. Procédé selon la revendication 5 ou 6, dans lequel l'étape consistant à estimer comporte la sous-étape consistant à évaluer l'échange de données se déroulant dans le canal, pour déterminer si un autre abonné a envoyé le certificat d'autorisation de niveau supérieur demandé (AAC_{B}) et/ou si le premier abonné (A) a reçu le certificat d'autorisation de niveau supérieur (AAC_{B}).

8. Procédé de sécurisation d'un échange de données entre un premier (A) et un deuxième abonné (B) via un réseau décentralisé avec une pluralité d'abonnés dans le cas de l'émission, dans lequel la sécurisation a lieu à l'aide de certificats individuels de niveau inférieur et de certificats d'autorisation de niveau supérieur, aux étapes suivantes consistant à:
envoyer au premier abonné (A) un message (CAM [avec PSC_{B}]) comportant le certificat individuel du deuxième abonné (B) au moyen duquel peut être identifié le deuxième abonné (B) et à partir duquel est obtenue une information d'identification du deuxième abonné (B);
recevoir un message (CAM [avec requête (AAC_{B}) + ID_{B}]) comportant une requête du premier abonné (A) relative au certificat d'autorisation du deuxième abonné (B) ensemble avec l'information d'identification du deuxième abonné (B); et
envoyer un message (CAM [AAC_{B}]) comportant le certificat d'autorisation du deuxième abonné (B) à la pluralité d'abonnés si l'information d'identification reçue avec la requête coïncide avec l'information d'identification propre du deuxième abonné (B); où l'envoi du message (CAM) comportant le certificat d'autorisation a lieu sans certificat individuel du deuxième abonné (B),
**caractérisé par le fait que** le certificat individuel du deuxième abonné (B) ne peut être authentifié que par le certificat d'autorisation du deuxième abonné (B).

9. Procédé selon la revendication 8, dans lequel les requêtes relatives au certificat d'autorisation sont traitées de préférence par rapport aux certificats individuels.

10. Procédé de sécurisation d'un échange de données entre un premier (A) et un deuxième abonné (B) via un réseau décentralisé avec une pluralité d'abonnés dans le cas d'un échange, dans lequel la sécurisation a lieu à l'aide de certificats individuels de niveau inférieur et de certificats d'autorisation de niveau supérieur, aux étapes suivantes consistant à:
envoyer au premier abonné (A), par le deuxième abonné (B), un message (CAM [PSC_{B}]) comportant le certificat individuel du deuxième abonné (B) au moyen duquel peut être identifié le deuxième abonné (B) et à partir duquel est reçue une information d'identification individuelle du deuxième l'abonné (B);
obtenir, par le premier abonné (A), le message (CAM [avec PSC_{B}]) du deuxième abonné (B) ensemble avec le certificat individuel du deuxième abonné (B);
déterminer, par le premier abonné (A), l'information d'identification (ID_{B}) du deuxième abonné (B) à partir du message (CAM [avec PSCB]);
envoyer, par le premier abonné (A), à la pluralité d'abonnés un message (CAM [avec requête (AAC_{B}) + ID_{B}]) comportant une requête du premier abonné (A) relative au certificat d'autorisation du deuxième abonné (B), dans lequel est envoyée, ensemble avec la requête, l'information d'identification du deuxième abonné (B), pour solliciter directement le deuxième abonné (B);
recevoir, par le deuxième abonné (B), le message (CAM [avec requête (AAC_{B}) + ID_{B}]) comportant la requête du premier abonné (A) relative au certificat d'autorisation du deuxième abonné (B) ensemble avec l'information d'identification du deuxième abonné (B); et
envoyer, par le deuxième abonné (B), à la pluralité d'abonnés un message (CAM [AAC_{B}]) comportant le certificat d'autorisation du deuxième abonné (B) lorsque l'information d'identification reçue avec la requête coïncide avec l'information d'identification propre du deuxième abonné (B), où l'envoi du message (CAM) comportant le certificat d'autorisation a lieu sans certificat individuel du deuxième abonné (B);
**caractérisé par le fait que** le procédé comporte par ailleurs l'étape consistant à
mettre en mémoire tampon un certificat individuel de niveau inférieur reçu du deuxième abonné (B), même si le certificat individuel reçu n'est pas authentifié, et
authentifier par le premier abonné (A) le certificat individuel reçu à la réception du certificat d'autorisation du deuxième abonné (B).

11. Procédé selon la revendication 10, **caractérisé par le fait que** le procédé comporte l'étape consistant à authentifier le certificat individuel de niveau inférieur reçu du deuxième abonné (B) dès que le deuxième abonné (B) et/ou un autre abonné (C, D) authentifie le certificat d'authentification (AAC_{B}) de niveau supérieur du deuxième abonné (B).

12. Procédé selon l'une des revendications précédentes, dans lequel sont utilisés pour la sécurisation d'autres certificats à un niveau inférieur au niveau du certificat individuel (PSC_{B}, PSC_{A}) et/ou supérieur au niveau du certificat d'autorisation.

13. Procédé selon l'une des revendications précédentes, dans lequel les certificats individuels (PSC_{B}, PSC_{A}) de niveau inférieur et/ou les certificats d'autorisation de niveau supérieur comportent des paramètres de configuration.

14. Procédé selon l'une des revendications précédentes, dans lequel le message (CAM) est un message de disponibilité périodique.

15. Procédé selon l'une des revendications précédentes, dans lequel le réseau décentralisé est un réseau radio et/ou un réseau ad hoc et/ou un réseau ad hoc de véhicule et/ou un réseau de véhicule à x.

16. Récepteur d'un premier abonné (A) pour sécuriser un échange de données entre le premier abonné (A) et un deuxième abonné (B) via un réseau décentralisé avec une pluralité d'abonnés dans le cas de réception, dans lequel la sécurisation à lieu à l'aide de certificats individuels de niveau inférieur (PSC_{B}, PSC_{A}) et de certificats d'autorisation de niveau supérieur, aux caractéristiques suivantes:
une unité de réception conçue pour obtenir un message (CAM) du deuxième abonné (B) ensemble avec le certificat individuel (PSC_{B}, PSC_{A}) du deuxième abonné (B) au moyen duquel peut être identifié le deuxième abonné (B) et à partir duquel est obtenue une information d'identification (ID_{B}) du deuxième abonné (B), et conçue pour déterminer l'information d'identification (ID_{B}) du deuxième abonné (B) à partir du message (CAM [avec PSC_{B}]); et
une unité d'émission configurée pour envoyer à la pluralité d'abonnés un message (CAM) comportant une requête du premier abonné (A) relative au certificat d'autorisation du deuxième abonné (B),
dans lequel est envoyée, ensemble avec la requête, l'information d'identification (ID_{B}) du deuxième abonné (B) pour solliciter directement le deuxième abonné (B);
**caractérisé par le fait que** l'unité de réception est conçue pour mettre en mémoire tampon le certificat individuel de niveau inférieur reçu du deuxième abonné (B), même si le certificat individuel reçu n'est pas authentifié et pour authentifier le certificat individuel reçu à la réception du certificat d'autorisation du deuxième abonné (B).

17. Emetteur d'un deuxième abonné (B) pour sécuriser une communication de données entre un premier abonné (A) et le deuxième abonné (B) via un réseau décentralisé avec une pluralité d'abonnés dans le cas d'émission, où la sécurisation a lieu à l'aide de certificats individuels (PSC_{B}, PSC_{A}) de niveau inférieur et de certificats d'autorisation de niveau supérieur, aux caractéristiques suivantes:
une unité d'émission conçue pour envoyer au premier abonné (A) un message (CAM) comportant le certificat individuel (PSC_{B}, PSC_{A}) du deuxième abonné (B), au moyen duquel peut être identifié le deuxième abonné (B) et à partir duquel est reçue une information d'identification (ID_{B}) du deuxième abonné (B);
une unité de réception conçue pour recevoir un message (CAM) comportant une requête du deuxième abonné (B) relative au certificat d'autorisation du deuxième abonné (B) ensemble avec l'information d'identification (ID_{B}) du deuxième abonné (B); et
dans lequel l'unité d'émission est par ailleurs configurée pour envoyer à la pluralité d'abonnés un message (CAM) comportant le certificat d'autorisation du deuxième abonné (B) lorsque l'information d'identification (ID_{B}) du deuxième abonné (B) reçue avec la requête coïncide avec l'information d'identification propre (ID_{B}), où l'envoi du message (CAM) comportant le certificat d'autorisation a lieu sans certificat individuel du deuxième abonné (B);
**caractérisé par le fait que** le certificat individuel du deuxième abonné (B) ne peut être authentifié [HP1] que par le certificat d'autorisation du deuxième abonné (B).

18. Système comportant un émetteur selon la revendication 16 et un récepteur selon la revendication 17.

19. Programme d'ordinateur avec un code de programme pour la réalisation d'un procédé selon l'une des revendications 1 à 15 lorsque le programme est exécuté sur un ou plusieurs ordinateurs.
